# EUROPEAN PATENT SPECIFICATION

(11) **EP 4 164 920 B1**
(45) Date of publication and mention of the grant of the patent: **03.04.2024**
(21) Application number: 21739433.7
(22) Date of filing: 10.06.2021
(51) Int. Cl.: B60R 3/02, B61D 23/02, F16H 19/06

(54) **RETRACTABLE PLATFORM FOR LEISURE VEHICLES**
EINZIEHBARE PLATTFORM FÜR FREIZEITFAHRZEUGE
PLATE-FORME RÉTRACTABLE POUR DES VÉHICULES DE LOISIRS

(30) Priority: 11.06.2020 IT 202000013981
(43) Date of publication of application: 19.04.2023
(73) Proprietor: LCI Italy S.r.l., 50026 San Casciano in Val di Pesa (FI) (IT)
(72) Inventor: MORELLI, Dario, 56026 San Casciano in Val di Pesa (FI) (IT)
(74) Representative: Leotta, Antonio
(86) International application number: PCT/IB2021/055101
(87) International publication number: WO 2021/250602

(56) References cited:
- WO-A1-2013/090920
- WO-A1-2020/208417
- DE-U1-202012 008 578
- US-A- 5 044 222
- US-A1- 2005 093 330

## Description

### TECHNICAL FIELD

The present invention relates to the technical field of accessory equipment for vehicles such as vans, minibuses, campers, motorhomes, and the like. The invention relates in particular to a retractable platform or step of the type associated with access openings of recreational vehicles, to facilitate access to the opening and therefore to the living spaces inside the vehicle.

### BACKGROUND ART

As is known, the rear part of the passenger compartment of such vehicles is simply intended for loading goods, in the case of vans, or provided with seats in minibuses, or still furnished in various manners in vans, motorhomes, mobile offices and the like.

In any case, it is necessary to access said passenger compartment area through lateral and/or rear access doors provided for this purpose.

The walking surface of the aforementioned vehicles is at a certain height above the ground, so much so that it is not uncommon for said lateral or rear doors to have a threshold placed lower than the aforementioned walking surface and, when closed, conceal an internal step to overcome to reach the floor of the vehicle.

Nevertheless, if the lower limit of the body is more than 25cm from the ground, the difference in height between said door threshold and the ground can also be uncomfortable to overcome for people who, due to age or physical problems, have reduced mobility.

Retractable steps, or platforms, preferably motorized, have long been available on the market to be installed in the underbody below said lateral or rear doors, so as to constitute an intermediate step between the ground and the threshold of one of said access doors.

In certain models, which constitute the prior art of reference for the present invention, the step is extractable, when needed, from a box-like container in which it is housed in the resting position. The document WO2013/090920 A1 discloses such a model.

Drives with electric motors, to be supplied with 12V or 24V direct current available on board the vehicles, are used to motorize such steps.

To convert the rotational motion of the electric motors into linear translations adapted to extract and retract the step, or platform, connecting rod and crank kinematic mechanisms or the like are usually used, as well as suitable speed reducers interposed between the motor and said kinematic mechanisms.

In the study of the motorization assemblies of the steps, it is sought to limit the additional dimensions given by the same assemblies in the movement direction of the steps as much as possible, to obtain a box-like container which is as compact as possible with the same stroke of the same retractable step.

The reason for this lies in the fact that the underbody installation of the retractable step may conflict with mechanical parts present therein, or structural elements of the frame, and it is obvious that such a risk likewise increases with the overall dimensions of such an added element.

Technical solutions specially designed for this purpose are often resorted to, which are valuable from a design point of view, but involve the construction of special members, containment casings and related accessories, whose design and construction costs cannot be divided among a sufficient number of specimens, resulting in an increase in the costs, and the selling price, of each retractable step.

To this is added the need to ensure the availability of spare parts, even after the end of production, with the related management costs.

A further possible drawback can arise from the fact that said retractable steps, or platforms, are installed in areas of the vehicle which are highly exposed to the action of water, snow, mud, with very broad thermal excursions that can lead to the formation of ice: these critical use conditions can compromise the operation of the movement devices of the step or platform to a greater extent the greater the complexity of the mechanical parts composing them.

### SUMMARY OF THE INVENTION

The object of the present invention is therefore to propose a retractable platform provided with a very compact movement device, so as to limit the overall dimensions, and at the same time of great constructional simplicity, to overcome all the related drawbacks lamented with the solutions of the known art.

Another object of the invention is to propose a retractable platform moved by a device which does not require significant investments and/or equipment for the construction thereof, but can use commercially available parts which are practically already ready, as they are used for other applications.

A further object, directly descending from the previous one, concerns the desire to streamline the management of spare parts for any maintenance operations, for the benefit of both those who produce the retractable platform and the customer.

Yet another object of the invention is to obtain a retractable platform moved by a device which combines the above prerogatives with greater reliability with respect to those which are known, even in difficult climatic conditions and/or when subjected to sprays of water, snow, mud or the formation of ice.

These and other objects are fully achieved by means of a retractable platform for recreational vehicles, the platform being of the type comprising a box-like container in which is housed, in rest position, an extractable step to be arranged in operating position, said retractable platform being provided for equipping lateral or rear access doors of commercial, camping or multi-purpose vehicles, so as to constitute an intermediate step between the ground and the threshold of one of said access doors. The platform of the invention is particularly provided with a movement device in which there are provided:
- an electric gearmotor assembly, arranged inside said box-like container, intended to rotate, in both directions, a gearwheel with which a coiled flexible cable of suitable length is engaged in gearing, arranged tangentially to said gearwheel, so that the rotation of the latter imparts straight forwards or backwards translations thereto;
- a straight guide, made integral with said box-like container, with orientation parallel to the direction of entry and exit of said extractable step, and having a length at least equal to the useful extraction and return stroke provided for the same extractable step, with said straight guide in a form suitable for slidably housing said coiled flexible cable, retaining it therein and keeping it straight;
- a bracket, fixed to the front end of said coiled flexible cable, so as to be external to said straight guide, with said bracket intended to be made integral with said extractable step, so as to imprint thereon, as a result of the translations of said coiled flexible cable, the respective aforementioned useful extraction and return strokes;
- a shaped tubular sheath, rearwardly associated with said electric gearmotor assembly, intended to receive and house the rear portion of said coiled flexible cable, as a result of said useful return stroke of the extractable step in said box-like container.

### BRIEF DESCRIPTION OF THE DRAWINGS

Further features of the invention will become apparent from the following description of a preferred embodiment of the retractable platform of the object, in accordance with what is proposed in the claims and with the aid of the attached drawings, in which:
- Fig. 1 illustrates in a schematic side view a retractable platform applied to the underbody of a vehicle, in a closed rest position;
- Fig. 2 illustrates, in a view similar to Fig. 1, the retractable platform in the extracted operating position;
- Fig. 3 illustrates, in axonometric top view, the movement device of the retractable platform, with the latter depicted in a dashed line to make all the elements of the device more visible;
- Fig. 4 illustrates a schematic front view of the retractable platform;
- Fig. 5 illustrates, on an enlarged scale, the detail K of Fig. 4.

### DESCRIPTION OF THE PREFERRED EMBODIMENTS

In the aforementioned figures, a movement device of a retractable platform 100, object of the present invention, has been indicated as a whole with reference numeral 1.

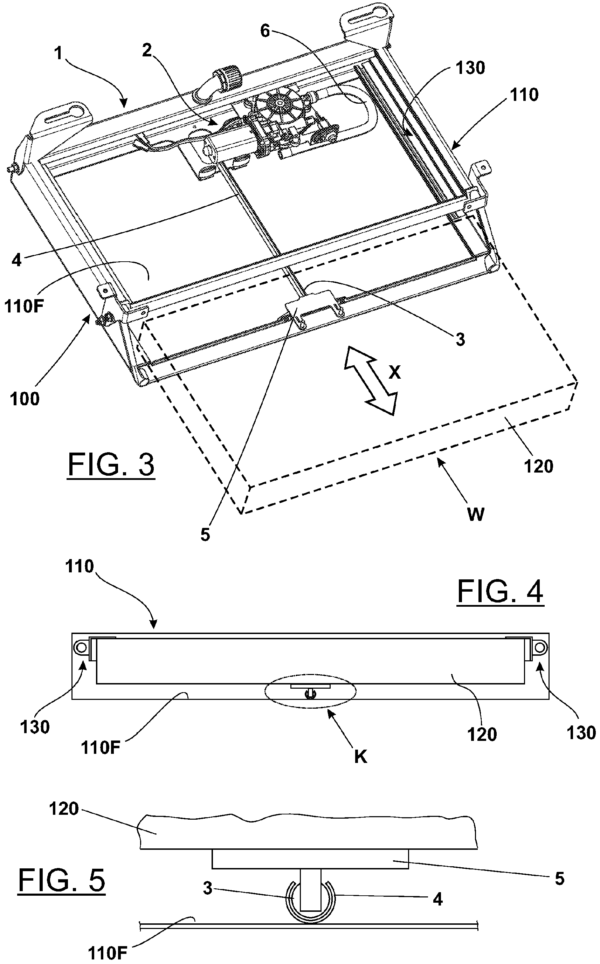

The retractable platform 100 comprises a box-like container 110 in which an extractable step 120 is housed, supported and guided by guide members 130 arranged for example on both sides (see Figures 3 and 4).

Said guide members 130 may be shaped in various manners, according to known techniques, and those depicted are only a non-binding schematic example.

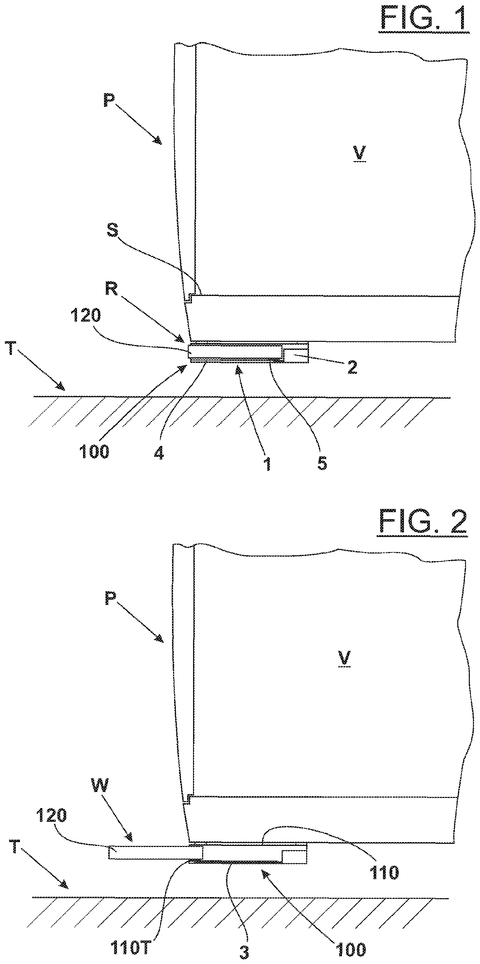

The retractable platform 100 is provided for equipping lateral or rear access doors P of commercial, camping or multi-purpose vehicles V, so as to constitute an intermediate step between the ground T and the threshold S of one of said access doors P (Figures 1 and 2).

The step 120, in rest position R (Fig. 1), is almost completely inserted into the box-like container 110 as it protrudes therefrom and from the vehicle body V when arranged in the extracted operating position W (Fig. 2), moved by the movement device 1.

The movement device 1 comprises an electric gearmotor assembly 2, arranged inside said box-like container 110, intended to rotate, in both directions, a gearwheel (not visible) with which a coiled flexible cable 3 of suitable length is engaged in gearing, arranged tangentially to said gearwheel, so that the rotation of the latter imparts straight forwards or backwards translations thereto.

Advantageously, the above electric gearmotor assembly 2 is of a commercial type, already commonly used in the automotive field for door regulators; consequently, the paired coiled flexible cable 3 is also of a substantially known type, commercially available in metres.

In the movement device 1 a straight guide 4 is provided, made integral with said box-like container 110, with orientation parallel to the direction X of entry and exit of said extractable step 120, and having a length at least equal to the useful extraction and return stroke provided for the same extractable step 120.

The straight guide 4 has a shape suitable for slidably housing said coiled flexible cable 3, for retaining it therein and keeping it straight.

In the preferred embodiment illustrated, the straight guide 4 has a circular section open for an angular sector less than 180°, so that said coiled flexible cable 3, housed therein, is prevented from exiting transversely (see in particular Fig. 5).

The described shape of the straight guide 4 allows to fix a bracket 5 to the front end of said coiled flexible cable 3, so as to make it protrude outside of the same straight guide 4.

The bracket 5 is intended to be made integral with the aforementioned extractable step 120, so as to imprint thereon linear translations synchronized with those of the coiled flexible cable 3 along the straight guide 4, to perform the aforementioned useful extraction and return strokes.

The straight guide 4 has the external head closed by a transverse element 110T of said box-like container 110, provided for defining a stop abutment of said extraction stroke of the extractable step 120.

So that the extractable step 120 is fluid and regular, the straight guide 4 is arranged on the bottom 110F of said box-like container 110, in a central position, with the bracket 5 facing upwards and fixed below the extractable step 120.

Obviously, the straight guide 4 is arranged perfectly parallel to the aforementioned guide members 130 interposed between the extractable step 120 and the box-like container 110.

Advantageously, the electric gearmotor assembly 2 is also placed on the same bottom 110F of the box-like container 110, so that the coiled flexible cable 3 extends on a horizontal plane.

The device 1 is completed with a shaped tubular sheath 6, rearwardly associated with said electric gearmotor assembly 2, intended to receive and house the rear portion of said coiled flexible cable 3 (not visible), as a result of said useful return stroke of the extractable step 120 in said box-like container 110.

To reduce the overall depth of the box-like container 110 as much as possible, said electric gearmotor assembly 2 is advantageously oriented so that the portion of said coiled flexible cable 3 dynamically engaged with the same assembly 2, is almost orthogonal with respect to the portion engaged in said straight guide 4 (see in particular Fig. 3).

In accordance with said preferred orientation of the electric gearmotor assembly 2, the shaped tubular sheath 6 has a predetermined curved shape, to shape said rear portion of said coiled flexible cable 3 housed therein (see still Fig. 3), the minimum radius of curvature of said curved shape being compatible with the flexibility of said coiled flexible cable 3.

From the above description, the advantageous aspects of the movement device proposed with the present invention are absolutely evident, concerning firstly the great simplicity of construction, with few operating parts of high reliability and, above all, with the most important ones such as the electric gearmotor assembly and the coiled flexible cable already available on the market at a low price, without requiring investments in equipment, moulds, prototypes and everything necessary for a correct industrialization of a product.

In addition to this, a particularly compact retractable platform is obtained in depth, minimizing possible interference with mechanical parts present in the underbody of the vehicles on which it is mounted; thus ensuring maximum compatibility with the various models and manufacturers of the vehicles.

Another advantageous aspect inherent in the choice of such a gearmotor assembly and the relative coiled flexible cable relates to the fact that there are no design constraints to the variation of the step extraction stroke, as in other kinematic mechanisms, whereby ample possibility is obtained to vary such a parameter as a function of each specific need.

The use of commercial components allows to considerably streamline the management of spare parts for any maintenance, for the benefit of both the retractable platform manufacturer and the customer.

The operating modes of the parts actuating the movement of the extractable step, and the peculiar construction features thereof, give the retractable platform greater reliability than similar known products, even in difficult weather conditions and/or when subjected to sprays of water, snow, mud or the formation of ice.

It is understood, however, that the foregoing is of exemplary and nonlimiting value, therefore any variations of detail, introduced for technical and/or functional reasons, are considered from now on to fall within the same protective scope defined by the following claims.

## Claims

1. Retractable platform (100) comprising a box-like container (110) in which is housed, in rest position (R), an extractable step (120) to be arranged in operating position (W), said retractable platform (100) being provided for equipping lateral or rear access doors (P) of commercial, camping or multi-purpose vehicles, so as to constitute an intermediate step between the ground (T) and the threshold (S) of one of said access doors (P), said retractable platform (100) being provided with a movement device (1) **characterized in that** it provides:
- an electric gearmotor assembly (2), arranged inside said box-like container (110), intended to rotate, in both directions, a gearwheel with which a coiled flexible cable (3) of suitable length is engaged in gearing, arranged tangentially to said gearwheel, so that the rotation of the latter imparts straight forwards or backwards translations thereto;
- a straight guide (4), made integral with said box-like container (110), with orientation parallel to the direction (X) of entry and exit of said extractable step (120), and having a length at least equal to the useful extraction and return stroke provided for the same extractable step (120), with said straight guide (4) in a form suitable for slidably housing said coiled flexible cable (3), retaining it therein and keeping it straight;
- a bracket (5), fixed to the front end of said coiled flexible cable (3), so as to be external to said straight guide (4), with said bracket (5) intended to be made integral with said extractable step (120), so as to imprint thereon, as a result of the translations of said coiled flexible cable (3), the respective aforementioned useful extraction and return strokes;
- a shaped tubular sheath (6), rearwardly associated with said electric gearmotor assembly (2), intended to receive and house the rear portion of said coiled flexible cable (3), as a result of said useful return stroke of the extractable step (120) in said box-like container (110).

2. Retractable platform according to claim 1, **characterized in that** said straight guide (4) has a circular section open for an angular sector less than 180°, so that said coiled flexible cable (3), housed therein, is prevented from exiting transversely.

3. Retractable platform according to claim 1, **characterized in that** said straight guide (4) is arranged on the bottom (11 0F) of said box-like container (110), in a central position, with said bracket (5) facing upwards and fixed below said extractable step (120).

4. Retractable platform according to claim 1 or 3, **characterized in that** said straight guide (4) is parallel to guide members (130) interposed between said extractable step (120) and box-like container (110).

5. Retractable platform according to claim 1, **characterized in that** said electric gearmotor assembly (2) is arranged on the bottom (110F) of said box-like container (110), oriented so that the portion of said coiled flexible cable (3) dynamically engaged with the same assembly (2), is almost orthogonal with respect to the portion engaged in said straight guide (4).

6. Retractable platform according to claim 1 or 5, **characterized in that** said shaped tubular sheath (6) has a predetermined curved shape, for shaping said rear portion of said coiled flexible cable (3) housed therein.

7. Retractable platform according to any one of the preceding claims, **characterized in that** said straight guide (4) has the external head closed by a transverse element (110T) of said box-like container (110), provided for defining a stop abutment of said extraction stroke of the extractable step (120).

## Patentansprüche

1. Versenkbare Plattform (100) mit einem kastenförmigen Behälter (110), in dem in Ruhestellung (R) eine ausziehbare Stufe (120) untergebracht ist, die in Betriebsstellung (W) anzuordnen ist, wobei die versenkbare Plattform (100) für die Ausstattung von seitlichen oder hinteren Zugangstüren (P) von Nutz-, Camping- oder Mehrzweckfahrzeugen vorgesehen ist, um eine Zwischenstufe zwischen dem Boden (T) und der Schwelle (S) einer der Zugangstüren (P) zu bilden, wobei die versenkbare Plattform (100) mit einer Bewegungsvorrichtung (1) versehen ist, **dadurch gekennzeichnet, dass** sie Folgendes erfasst:
- eine elektrische Getriebemotoreinheit (2), die im Inneren des kastenförmigen Behälters (110) angeordnet ist und dazu bestimmt ist, in beiden Richtungen ein Zahnrad in Drehung zu versetzen, mit dem ein gewickeltes biegsames Kabel (3) geeigneter Länge in Eingriff steht, das tangential zu dem Zahnrad angeordnet ist, so dass die Drehung des letzteren diesem eine geradlinige Vorwärts- oder Rückwärtsverschiebung verleiht;
- eine gerade Führung (4), die mit dem kastenförmigen Behälter (110) fest verbunden ist, parallel zur Eintritts- und Austrittsrichtung (X) der ausziehbaren Stufe (120) ausgerichtet ist und eine Länge aufweist, die mindestens gleich dem für dieselbe ausziehbare Stufe (120) vorgesehenen nutzbaren Auszieh- und Rückholhub ist, wobei die gerade Führung (4) eine Form aufweist, die geeignet ist, das gewickelte flexible Kabel (3) gleitend aufzunehmen, es darin zu halten und es gerade zu halten;
- einen Bügel (5), der am vorderen Ende des aufgewickelten biegsamen Kabels (3) so befestigt ist, dass er sich außerhalb der geraden Führung (4) befindet, wobei der Bügel (5) dazu bestimmt ist, mit der ausziehbaren Stufe (120) fest verbunden zu werden, um ihr als Ergebnis der Translationen des aufgewickelten biegsamen Kabels (3) die jeweiligen vorgenannten nützlichen Auszieh- und Rückführhübe aufzuprägen;
- eine geformte rohrförmige Hülle (6), die hinten mit der elektrischen Getriebemotoreinheit (2) verbunden ist und dazu bestimmt ist, den hinteren Teil des aufgewickelten flexiblen Kabels (3) als Ergebnis des nützlichen Rückhubs der ausziehbaren Stufe (120) in dem kastenartigen Behälter (110) aufzunehmen und unterzubringen.

2. Ausziehbare Plattform nach Anspruch 1, **dadurch gekennzeichnet, dass** die gerade Führung (4) einen kreisförmigen Querschnitt aufweist, der für einen Winkelsektor von weniger als 180° offen ist, so dass das aufgewickelte flexible Kabel (3), das darin untergebracht ist, daran gehindert wird, in Querrichtung auszutreten.

3. Ausziehbare Plattform nach Anspruch 1, **dadurch gekennzeichnet, dass** die gerade Führung (4) auf dem Boden (110F) des kastenförmigen Behälters (110) in einer zentralen Position angeordnet ist, wobei die Halterung (5) nach oben weist und unterhalb der ausziehbaren Stufe (120) befestigt ist.

4. Versenkbare Plattform nach Anspruch 1 oder 3, **dadurch gekennzeichnet, dass** die gerade Führung (4) parallel zu Führungselementen (130) verläuft, die zwischen der ausziehbaren Stufe (120) und dem kastenförmigen Behälter (110) angeordnet sind.

5. Ausziehbare Plattform nach Anspruch 1, **dadurch gekennzeichnet, dass** die elektrische Getriebemotoreinheit (2) auf dem Boden (110F) des kastenförmigen Behälters (110) angeordnet und so ausgerichtet ist, dass der Abschnitt des aufgewickelten flexiblen Kabels (3), der dynamisch mit derselben Getriebemotoreinheit (2) in Eingriff steht, nahezu orthogonal zu dem Abschnitt ist, der in die gerade Führung (4) eingreift.

6. Einziehbare Plattform nach Anspruch 1 oder 5, **dadurch gekennzeichnet, dass** die geformte röhrenförmige Hülle (6) eine vorbestimmte gekrümmte Form aufweist, um den hinteren Abschnitt des darin untergebrachten aufgewickelten flexiblen Kabels (3) zu formen.

7. Ausziehbare Plattform nach einem der vorhergehenden Ansprüche, **dadurch gekennzeichnet, dass** die gerade Führung (4) den äußeren Kopf aufweist, der durch ein Querelement (110T) des kastenförmigen Behälters (110) verschlossen ist, das dazu vorgesehen ist, einen Anschlag für den Ausziehhub der ausziehbaren Stufe (120) zu definieren.

## Revendications

1. Plate-forme rétractable (100) comprenant un conteneur en forme de boîte (110) dans lequel est logée, en position de repos (R), une marche extractible (120) à disposer en position de fonctionnement (W), ladite plate-forme rétractable (100) étant prévue pour équiper des portes d'accès latérales ou arrière (P) de véhicules utilitaires, de camping ou polyvalents, de manière à constituer une marche intermédiaire entre le sol (T) et le seuil (S) de l'une desdites portes d'accès (P), ladite plate-forme rétractable (100) étant pourvue d'un dispositif de déplacement (1), **caractérisé en ce qu'**il prévoit:
- un groupe motoréducteur électrique (2), disposé à l'intérieur dudit conteneur en forme de boîte (110), destiné à faire tourner, dans les deux sens, une roue dentée avec laquelle est engrené un câble flexible enroulé (3) de longueur appropriée, disposé tangentiellement à ladite roue dentée, de sorte que la rotation de cette dernière lui imprime des translations rectilignes vers l'avant ou vers l'arrière;
- un guide droit (4), solidaire dudit conteneur en forme de boîte (110), d'orientation parallèle à la direction (X) d'entrée et de sortie de ladite marche extractible (120), et d'une longueur au moins égale à la course utile d'extraction et de retour prévue pour la même marche extractible (120), ledit guide droit (4) ayant une forme appropriée pour loger de façon coulissante ledit câble flexible enroulé (3), le retenir à l'intérieur et le maintenir en position rectiligne;
- un support (5), fixé à l'extrémité avant dudit câble flexible enroulé (3), de manière à être extérieur audit guide droit (4), ledit support (5) étant destiné à être rendu solidaire de ladite marche extractible (120), de manière à y imprimer, du fait des translations dudit câble flexible enroulé (3), les courses utiles respectives d'extraction et de retour susmentionnées;
- une gaine tubulaire profilée (6), associée vers l'arrière audit ensemble motoréducteur électrique (2), destinée à recevoir et à loger la partie arrière dudit câble flexible enroulé (3), à la suite de ladite course utile de retour de la marche extractible (120) dans ledit conteneur en forme de boîte (110).

2. Plate-forme rétractable selon la revendication 1, **caractérisée en ce que** ledit guide droit (4) a une section circulaire ouverte pour un secteur angulaire inférieur à 180°, de sorte que ledit câble flexible enroulé (3), logé à l'intérieur, est empêché de sortir transversalement.

3. Plate-forme rétractable selon la revendication 1, **caractérisée en ce que** ledit guide droit (4) est disposé sur le fond (110F) dudit conteneur en forme de boîte (110), en position centrale, avec ledit support (5) tourné vers le haut et fixé sous ladite marche extractible (120).

4. Plate-forme rétractable selon la revendication 1 ou 3, **caractérisée en ce que** ledit guide droit (4) est parallèle aux éléments de guidage (130) interposés entre ladite marche extractible (120) et le conteneur de type boîte (110).

5. Plate-forme rétractable selon la revendication 1, **caractérisée en ce que**, ledit ensemble motoréducteur électrique (2) est disposé sur le fond (110F) dudit conteneur en forme de boîte (110), orienté de telle sorte que la partie dudit câble flexible enroulé (3) engagée dynamiquement avec le même ensemble (2), est presque orthogonale par rapport à la partie engagée dans ledit guide rectiligne (4).

6. Plate-forme rétractable selon la revendication 1 ou 5, **caractérisée en ce que**, ladite gaine tubulaire profilée (6) présente une forme incurvée prédéterminée, pour façonner ladite partie arrière dudit câble flexible enroulé (3) qui y est logé.

7. Plate-forme rétractable selon l'une quelconque des revendications précédentes, **caractérisée en ce que** ledit guide droit (4) a la tête externe fermée par un élément transversal (110T) dudit conteneur en forme de boîte (110), prévu pour définir une butée d'arrêt de ladite course d'extraction de la marche extractible (120).
